# FASCICULE DE BREVET EUROPEEN

(11) **EP 0 920 377 B1**
(45) Date de publication et mention de la délivrance du brevet: **26.11.2003**
(21) Numéro de dépôt: 98921582.7
(22) Date de dépôt: 23.04.1998
(51) Int. Cl.: B32B 17/10, C03C 27/12, B60J 1/00

(54) **PROCEDE DE FABRICATION D'UN VITRAGE FEUILLETE**
VERFAHREN ZUR HERSTELLUNG EINER VERBUNDGLASSCHEIBE
METHOD FOR MAKING A LAMINATED GLASS SHEET

(30) Priorité: 24.04.1997 FR 9705066
(43) Date de publication de la demande: 09.06.1999
(73) Titulaire: SAINT-GOBAIN GLASS FRANCE, 92400 Courbevoie (FR)
(72) Inventeur: FROST, Thorsten, D-52477 Alsdorf (DE); IMMERSCHITT, Stefan, D-52134 Herzogenrath (DE); KRAEMLING, Franz, D-52072 Aachen (DE); LECLERCQ, Philippe, F-91390 Morsang sur Orge (FR); PONCET, Laurent, F-60200 Compiègne (FR); SCHILDE, Heinz, D-52146 Wurselen (DE)
(74) Mandataire: Renous Chan, Véronique
(86) Numéro de dépôt international: FR9800808
(87) Numéro de publication internationale: WO98047703

(56) Documents cités:
- EP-A- 0 724 955
- WO-A-85/01725
- US-A- 3 794 809
- US-A- 5 320 893

## Description

La présente invention concerne un procédé de fabrication de vitrages feuilletés, notamment ceux destinés à équiper des véhicules du type pare-brise. Elle concerne plus particulièrement les vitrages feuilletés dont l'intercalaire à base de polymère qui se trouve disposé entre les substrats rigides, généralement en verre, est muni d'un revêtement à propriétés thermiques, notamment de réflexion dans l'infrarouge, ce qui confère à ces vitrages une fonction de protection vis-à-vis des rayonnements solaires tout-à-fait intéressante.

De telles configurations de vitrages sont notamment connues des brevets US-4 639 069, US-4 369 945, EP-0 303 586 et WO-90/08334 : on y utilise des intercalaires généralement constitués d'une feuille de polymère transparent du type polyéthylènetéréphtalate PET munie sur l'une de ses faces du revêtement réfléchissant dans l'infrarouge, que l'on insère entre deux feuilles en polymère thermoplastique du type polyvinylbutyral PVB avant d'effectuer l'assemblage usuel de cet intercalaire multicouche avec les deux substrats de verre.

Un problème particulier à ce type de configuration s'est cependant rapidement posé : en choisissant ces « intercalaires multicouches » de dimensions identiques aux verres, le revêtement réfléchissant l'infrarouge se retrouvait affleurant le chant des verres. Or, il comprend usuellement des couches susceptibles de se détériorer, de s'oxyder notamment, au contact de l'humidité. Cela est tout particulièrement vrai pour les couches métalliques, notamment en argent, qui ont tendance à se corroder sur leur périphérie, corrosion se propageant progressivement sur l'ensemble de leur surface et entraînant défauts optiques et perte des performances thermiques.

Des solutions ont déjà été proposées pour résoudre ce problème. Ainsi, le brevet US-5 131 967 décrit une technique utilisant le laser pour marger le revêtement réfléchissant déposé sur le PET, et éviter ainsi qu'il n'affleure. Cependant, c'est une technique qui paraît lourde et qui augmente sensiblement le temps de production, puisque le laser doit effectuer une abalation du revêtement réfléchissant sur une bande périphérique de largeur non négligeable.

Une autre solution a été exposée dans le brevet US-5 320 893 : il s'agit dans ce document de faire une coupe dans l'épaisseur de la feuille de PET sur son pourtour, de sorte que la corrosion périphérique du revêtement réfléchissant soit stoppée dans sa propagation par cette ligne de rupture. Il n'est pas sûr qu'une simple ligne puisse ainsi empêcher toute propagation de corrosion.

L'invention a alors pour but de nouveaux procédés de fabrication de ce type de vitrage, qui préservent la qualité du revêtement réfléchissant dans les zones de visibilité, tout en remédiant aux inconvénients précités, notamment en étant à la fois de mise en oeuvre relativement simple et d'une grande efficacité et fiabilité.

L'invention a alors tout d'abord pour objet un premier procédé de fabrication d'un vitrage feuilleté comprenant au moins deux substrats rigides de type verre assemblés par un intercalaire comprenant au moins une feuille à base de polymère(s) munie sur au moins une de ses faces d'une couche mince ou d'un empilement de couches minces à propriétés thermiques, notamment à propriétés de réflexion dans l'infrarouge. Ce procédé comporte les étapes suivantes :
□ a) - on découpe l'intercalaire « complet » ou comprenant déjà au moins la feuille munie de la (des) couche(s) mince(s) à des dimensions essentiellement identiques ou supérieures à celles de l'un au moins des deux substrats,
□ b) - on incise ledit intercalaire sur au moins l'épaisseur de la feuille munie de la (des) couche(s) mince(s), de manière à délimiter au moins une zone périphérique dans ladite feuille localisée entre la ligne d'incision et son bord,
□ c) - on assemble l'intercalaire « complet » entre les deux substrats en lui adjoignant éventuellement sa (ses) feuille(s) de polymère(s) manquante(s) dans le cas où il n'était pas « complet » précédemment,
□ d) - on détache par traction mécanique la (les) zone(s) périphérique(s) de la feuille de l'intercalaire,
□ e) - on procède à la transformation du vitrage feuilleté.

Ici, et dans toute la suite du texte, on désignera la (les) couche(s) mince(s) à propriétés thermiques, notamment à propriétés de réflexion dans l'infrarouge sous le terme de « couche(s) fonctionnelle(s) ». L'invention comprend également sous ce terme une ou des couches minces qui, cumulativement ou alternativement à des propriétés thermiques auraient également d'autres propriétés, notamment optiques, électriques.

On comprend au sens de l'invention par « assemblage », l'opération consistant à positionner correctement les uns par rapport aux autres tous les éléments du vitrage feuilleté avant d'effectuer l'opération qui les rendra solidaires définitivement.

On comprend au sens de l'invention par « transformation » cette opération de solidarisation, ayant généralement recours à une mise sous pression et un apport thermique.

En dernier lieu, on a désigné précédemment l'intercalaire, à l'étape a), comme étant complet ou non complet. Au sens de l'invention, il faut comprendre par « complet », l'intercalaire possédant déjà toutes les feuilles de polymère du vitrage feuilleté définitif, notamment une séquence du type PVB / PET / couche(s) fonctionnelle(s) / PET / PVB (c'est-à-dire le support en polymère de la ou des couche(s) fonctionnelle(s) déjà entouré des deux feuilles de polymère du type thermoplastique qui vont permettre son assemblage avec le(s) substrat(s) rigide(s), du type verriers du vitrage final). A l'étape a), il peut être déjà complètement constitué et comporter toutes ces feuilles. Mais il peut aussi être incomplet, ne comporter qu'une partie, les feuilles de polymère restantes étant alors ajoutées lors de l'assemblage, en les superposant à l'intercalaire « incomplet » qui a été incisé selon l'étape b).

L'intercalaire « incomplet » sur lequel l'incision est faite peut ainsi ne comporter que la séquence du type PVB / PET / couche(s) fonctionnelle(s) (c'est-à-dire le support en polymère muni de la ou des couches fonctionnelles seul ou associé en une seule des feuilles de polymère thermoplastique permettant son assemblage avec un -des) substrat(s) verrier(s)).

Le procédé selon l'invention comporte donc généralement les étapes (a) à (e).

Selon une première variante, les étapes sont effectuées successivement dans l'ordre dans lequel elles ont été annoncées plus haut.

Selon une seconde variante, l'ordre dans lequel on effectue ces étapes peut être modifié, notamment en inversant l'ordre des étapes (c) et (d), c'est-à-dire en ôtant les zones périphériques de l'intercalaire incisées selon l'étape (a) avant de procéder à l'assemblage. On peut ainsi, de façon particulièrement préférée, effectuer l'incision selon l'étape (a) de l'intercalaire incomplet, notamment du type PVB / PET / couche(s) fonctionnelle(s), puis détacher les zones incisées, avant d'adjoindre à l'intercalaire sa seconde feuille de PVB et de l'assembler aux deux substrats verriers. (Ici et dans toute la suite du texte, sous le terme spécifique de PVB, qui n'est qu'un exemple, il faut comprendre toute feuille de polymère thermoplastique, et sous le terme spécifique de PET, toute feuille de polymère de type souple susceptible d'être munie de couche(s) fonctionnelle(s)).

Le procédé selon l'invention est particulièrement avantageux : en effet, dans le vitrage feuilleté terminé, la feuille munie du revêtement réfléchissant se trouve effectivement « margée » quand la ligne d'incision suit tout son pourtour, le margeage ayant été opéré de manière à ce que le revêtement réfléchissant (la ou les couche(s) mince(s) fonctionnelle(s)) ne se retrouve plus affleurant le chant des verres, ce qui réduit considérablement, et même supprime complètement, les risques de corrosion par les bords.

La technique de l'invention autorise en fait un margeage « sélectif », en ce sens que l'on peut moduler à façon la forme de la ou des lignes d'incision de manière à adapter le margeage à chaque configuration de vitrage, selon l'ampleur des risques de corrosion. Ainsi, on peut choisir un margeage sur une bande périphérique de la feuille plus ou moins large suivant le vitrage. En outre, dans un même vitrage, on peut faire varier la largeur et la forme des zones périphériques qui vont définir le margeage de la feuille, par exemple pour « contourner » l'emplacement prévu entre substrats et feuille d'éléments susceptibles d'apporter des risques de corrosion, de créer des faiblesses dans l'étanchéité périphérique, par exemple, comme on le détaillera ultérieurement, des éléments de connectique, des capteurs, des antennes radio, ou pour tenir compte des formes géométriques particulières des vitrages.

La technique selon l'invention est donc particulièrement souple et autorise un margeage particulièrement modulable géométriquement et particulièrement précis. Ainsi, la (les) ligne(s) d'incision peut(vent) être choisie(s) afin de suivre très précisément la forme des chants des substrats, dans des proportions plus réduites, notamment de manière à ce que la feuille, une fois le vitrage terminé, présente, par exemple, les mêmes arrondis dans les angles que les substrats eux-mêmes, ce qui est tout-à-fait esthétiques. On peut aussi prévoir un margeage plus grand dans les zones où les chants des verres présentent des formes très spécifiques pouvant éventuellement créer des faiblesses vis-à-vis de l'attaque par l'humidité, par exemple des formes en pointe.

La technique de l'invention est en outre facile de mise en oeuvre, tout particulièrement lors de la phase d'assemblage. En effet, il est aisé de positionner correctement l'intercalaire par rapport aux deux verres, puisque l'intercalaire est au moins aussi grand que ces derniers. (Plus grand, il sera simplement nécessaire de faire un ébavurage final). Il est un peu plus délicat d'avoir à positionner un intercalaire déjà margé, de dimensions plus réduites que les deux verres, car dans ce cas, il faut prévoir sur tout son pourtour une distance à peu près constante d'avec les chants du verre.

Avantageusement, la feuille munie de la (des) couche(s) mince(s) réfféchissante(s) est à base de polymère(s) flexible(s), usuellement transparents ou essentiellement transparents, notamment appartenant à la famille des polyesters, du type polyester linéaire tel que le polyéthylènetéréphtalate PET, des polycarbonates, le polypropylène, le polyéthylène, les polyéthersulfures, les polysulfures, en général les polyméthacrylates. Le PET se prête particulièrement bien à cette application.

De préférence, l'intercalaire est « composite » en ce sens qu'il comprend plusieurs feuilles à base de polymères. Avantageusement, il a une configuration consistant à ce que la feuille munie de la (des) couche(s) mince(s), notamment en PET, se trouve entre au moins deux feuilles à base de polymère(s) thermoplastique(s) se prêtant bien à un assemblage par feuilletage avec des substrats rigides du type verre. Il peut s'agir plus particulièrement de feuilles à base de polyvinylbutyral PVB ou de polyuréthane(s) PU.

Quand l'intercalaire est ainsi « composite », lorsqu'on incise la feuille munie de la (des) couche(s) mince(s) dans l'étape (b), on incise en même temps la (les) feuille(s), qui la surmonte(nt) (et éventuellement partiellement les feuilles qui lui sont sous-jacentes). En effet, le plus simple est de faire cette étape (b) sur l'intercalaire complet, une fois toutes ses feuilles constitutives assemblées. L'incision des feuilles « au-dessus » de la feuille fonctionnelle à couche(s) mince(s) ne spose pas de problème d'étanchéité périphérique. En effet, lors du détachement mécanique de la feuille fonctionnelle pendant l'étape (d), tout particulièrement lorsqu'il s'agit de PET, la ou les feuilles qui lui sont associées dans l'intercalaire, de type PVB, et qui ont, elles aussi, pu être incisées lors de l'étape (b), reste(nt) en place entre les deux substrats rigides : lors de la transformation utilisant en général à la fois des moyens de mise sous vide périphérique du type anneau d'aspiration, des moyens de mise sous pression du vitrage et des moyens de chauffage, lorsqu'on a un intercalaire composite du type PVB/PET/PVB, les deux feuilles de PVB qui se retrouvent jointives dans les zones périphériques où la feuille de PET a été retirée, se fondent l'une dans l'autre, créant ainsi un joint étanche vis-à-vis du bord de la feuille de PET munie de la (des) couche(s) mince(s). De préférence, lors de l'étape (d), seule(s) la (les) zone(s) périphérique(s) de la feuille munie de couche(s) est (sont) détachée(s). A noter que dans le cas d'un intercalaire de type PVT/PET/PVB, on peut en faire faire l'étape d'incision sur l'intercalaire « incomplet » bi-feuille PVB/PET, on vient ensuite ajouter la seconde feuille de PVB à l'assemblage.

L'incision selon l'étape (b) peut être effectuée de différentes manières : on peut prévoir une découpe par emboutissage, ou par un organe mobile muni d'un élément tranchant du type lame ou laser. Cette dernière vairante est la plus avantageuse, car on peut commander le mouvement de l'organe mobile de manière automatisée en modifiant à volonté son trajet et/ou sa profondeur de découpe, selon la ligne d'incision souhaitée ou les dimensions du vitrage feuilleté à fabriquer, par simple reprogrammation de l'organe mobile par des moyens informatiques/électroniques. On peut notamment utiliser des dispositifs de découpe du type de ceux commercialisés par lés sociétés ARISTO ou ZÜND.

En ce qui concerne le choix de la couche ou de l'empilement de couche(s) destinée(s) à conférer au vitrage des propriétés thermiques, notamment de réflexion dans l'infrarouge ; on peut choisir, au moins une couche ssentiellement métallique, notamment à base d'au moins un des métaux suivants : argent, cuivre, or, nickel, chrome, indium, tantale, niobium, aluminium, notamment un alliage du type nickel-chrome ou appartenant à la famille des aciers, ou encore à base de nitrure métallique du type TiN, ZrN ou encore à base d'oxyde(s) métallique(s) dopé(s) tels que l'oxyde d'étain dopé au fluor SnO₂:F ou l'oxyde d'indium dopé à l'étain ITO. En fait, le critère est que les couches puissent être déposées sur des substrats de polymère type PET par des techniques connues.

On peut utiliser une seule couche de ce type, ou d'une pluralité séparée par des couches à base de matériaux diélectriques du type oxyde métallique (Nb₂O₅, Ta₂O₅, ZnO, In₂O₃, TiO₂, SnO₂, Al₂O₃, WO₃, ...) ou nitrure du type Si₃N₄ ou d'autres matériaux du type MgF₂.

Pour plus de renseignements sur ce type d'empilements, on pourra notamment se reporter aux brevets EP-0 438 357 décrivant une couche à base de tantale, EP-0 511 901 décrivant une couche à base d'alliage nickel-chrome, d'acier ou de tantale associée à des couches de diélectrique du type SnO₂, TiO₂, Ta₂O₅. On peut aussi se reporter aux brevets EP-0 506 507, EP-0 611 213, EP-0 636 587, EP-0 678 484, EP-0 718 250 pour des empilements utilisant une couche d'argent entre au moins deux couches de matériau diélectrique, ou encore au brevet EP-0 638 528 pour des empilements utilisant deux couches d'argent intercalées par une (des) couche(s) de matériau diélectrique.

Pour faciliter le détachement par traction mécanique des zones périphériques « incisées » de la feuille munie de la (des) couche(s) mince(s), lors de l'étape (d), on peut avantageusement prévoir que ces zones périphériques soient de dimensions telles qu'elles « débordent » localement des chants des substrats rigides, une fois l'intercalaire positionné entre ces deux derniers, notamment sous la forme de languette(s) d'amorçage sur laquelle (lesquelles) il est aisé d'exercer une traction mécanique pour détacher lesdites zones périphériques. Pour faciliter le détachement, il est préférable de prévoir ces languettes dans le prolongement d'au moins un des bords des verres.

Selon une variante particulière de l'invention, on peut prévoir que la ou les couche(s) mince(s) à propriétés thermiques soit (soient) munie(s) de moyens d'alimentation en électricité. On peut ainsi lui conférer, à volonté, une fonction de couche chauffante particulièrement utile pour désembuer/dégivrer des vitrages, notamment ceux équipant des véhicules du type pare-brise où la visibilité est primordiale. Reste ensuite à mettre au point la mise en place de la connectique permettant son alimentation en électricité, de manière à ce que l'opération de détachement des zones périphériques lors de l'étape (s) du procédé de l'invention ne soit par perturbante.

Selon une autre variante de l'invention, on peut munir également une des faces d'au moins une des feuilles constitutives de l'intercalaire, qui ne soit pas en contact avec la (les) couche(s) à propriétés thermiques, d'une couche chauffante ou d'un réseau de fils chauffants avec leur connectique adaptée. La configuration la plus simple consiste, dans un intercalaire de type PVB/PET/couche(s) à propriétés thermiques/PVB, à prévoir, sur l'une des faces du PVB destinée à être mise au contact du substrat rigide du type verre, un réseau de fils chauffants que l'on vient, de manière connue « incruster » à sa surface. Ce réseau, toujours de manière connue, est alimenté par des amenées de courant opposées appelées parfois « bus bars » et constituées de bandes de métal du type cuivre. Les dimensions de ce réseau et le positionnement de ces « bus bars » vis-à-vis du bord du vitrage feuileté peuvent rester identiques aux dimensions et aux positionnements de ce type de réseau chauffant d'un feuilleté « standard » où l'intercalaire n'est constitué que d'une feuille de thermoplastique du type PVB. En effet, d'après le procédé de l'invention, seule se retrouve « margée », dans le vitrage feuilleté final, la feuille de l'intercalaire qui est munie de la ou des couches minces à propriétés thermiques, les autres feuilles de polymère qui lui sont associées, notamment de PVB restant en place et de dimensions exactement ajustées à celles des deux verres. Avantageusement, le réseau de fils chauffants est dimensionné de façon à être distant d'au plus 1 cm, notamment d'environ 6 à 8 mm, du chant des substrats de verre du vitrage une fois feuilleté.

La « ligne d'incision » dans la feuille munie de la ou des couches à propriétés thermiques, qui va déterminer les zones périphériques ultérieurement détachées de ladite feuille, peut être de profils très variés selon les besoins. Ainsi, dans la configuration la plus simple, elle peut, dans des proportions plus réduites, « suivre » au moins en partie, un profil identique ou voisin de celui des chants des substrats rigides type verre. On obtient ainsi un margeage de la feuille esthétique, régulier, très précis, qui peut aisément adopter et suivre les « arrondis » des verres.

Ladite ligne peut ainsi être choisie de façon à ce qu'une fois l'assemblage effectué, il y ait une marge entre le chant de la feuille et les chants des substrats rigides du type verre, toujours d'au moins 3 mm, notamment d'au moins 5 mm, de préférence d'environ 6 mm. On s'assure ainsi d'une distance suffisante entre les bords de la ou des couches minces à propriétés thermiques et les bords du vitrage lui-même, évitant tout risque de corrosion de la (des) couche(s) par les bords.

Si le vitrage feuilleté est plus complexe, en ce sens qu'il comporte des éléments insérés entre les substrats de verre et l'intercalaire, on peut adapter en conséquence la ligne d'incision de façon à « enclaver » lesdits éléments : une fois les zones périphériques détachées selon cette ligne, ces éléments seront donc au contact des feuilles de l'intercalaire qui ne sont pas munies de la (des) couche(s) à propriétés thermiques, la feuille munie de cette (ces) couche(s) se retrouvant de dimensions telles qu'elle les « contourne ». L'intérêt, là encore, est de protéger la (les) couche(s) mince(s) dans les zones où elle(s) serait(ent) davantage susceptible(s) d'être attaquée(s) par la corrosion, par pénétration d'humidité par exemple, notamment celles où sont présents des éléments additionnels aux matériaux propres au vitrage feuilleté. Il peut s'agir de tous les éléments de connectique, par exemple ceux évoqués plus haut pour alimenter un réseau de fils chauffants, tout particulièrement dans la zone de jonction entre les collecteurs (bus-bars) et les amenées de courant. Cela peut aussi être des capteurs, du type capteurs volumétriques, capteurs d'humidité, capteurs d'ultrasons, capteurs du type de ceux utilisés dans le télépéage. Il peut aussi s'agir d'éléments électroniques du type puce électronique, ou d'éléments émetteur/récepteur d'ondes du type antenne radio.

Selon une variante de l'invention, on peut également prévoir, lors de l'étape b) d'incision de l'intercalaire, de procéder à des incisions en ligne fermée, pour créer des « fenêtres » dans la feuille munie de sa (ses) couche(s) mince(s) dans sa partie centrale, c'est-à-dire pas à sa périphérie.

Ces « fenêtres » une fois incisées peuvent, manuellement, être décollées de l'intercalaire avant l'étape d'assemblage. Ce margeage interne permet d'insérer en partie non périphérique des éléments divers, notamment tous les types de capteurs, éléments électroniques, évoqués précédemment; tels que les capteurs de télépéage ou des éléments d'antenne par exemple pour les systèmes « G.P.S. » (technique de repérage par satellite, dite « Global Positioning System ». Il s'avère aussi utile sans ajouter d'élément dans la « fenêtre » ainsi créée, notamment pour servir de fenêtre laissant passer les ondes électromagnétiques (application aux télépéages).

Selon l'invention, on peut prévoir de masquer tout ou partie des zones de l'intercalaire correspondant aux zones (« fenêtres » et/ou bordure de la feuille) extraites de la feuille munie de la (des) couche(s) à propriétés thermiques, lors de l'étape (d), par un revêtement opacifiant. Ce revêtement peut être déposé directement sur l'une des faces de l'un des substrats de verre, notamment par dépôt d'émail. Le dépôt peut se faire sur la face du verre tournée vers l'extérieur, ou sur la face du verre destinée à se trouver du côté de l'intercalaire, ce dernier type de dépôt étant notamment décrit dans le brevet WO-94/22779. Le revêtement opacifiant peut aussi être déposé par une technique d'impression par jet d'encre ou de sérigraphie, sur l'un des verres ou sur l'une des faces de l'une des feuilles à base de polymère associées à la feuille munie de la (des) couche(s) mince(s) à propriétés thermiques dans l'intercalaire. Il peut aussi s'agir de dépôt de peinture opaque, notamment à base de polyuréthane. Si on effectue ce dépôt sur la face du verre tournée vers l'intercalaire, il est bon de prévoir une peinture présentant une bonne compatibilité avec le polymère avec laquelle elle va être en contact, pour assurer une bonne adhérence verre/polymère dans la zone peinte.

Il est aussi possible d'opacifier la bordure de l'une des feuilles de PVB dans un intercalaire de type PVB/PET/PVB, voire de la teinter dans la masse. Il est en effet avantageux d'utiliser les feuilles de type PVB déjà existantes qui sont munies en périphérie d'une bande colorée dans la masse, notamment dans les bleus ou dans les verts, avec éventuellement un dégradé de coloration, notamment vers l'intérieur de la feuille.

Par un tel masquage, on s'assure que, une fois monté, on ne pourra pas distinguer à la périphérie du vitrage feuilleté, des zones un peu plus claires, de nuance légèrement différente correspondant aux zones « margées » de la feuille munie de la (des) couche(s). Cela n'est cependant pas indispensable sur le plan esthétique : en effet, l'invention permet d'obtenir une « transition » très nette, très précise, finalement assez esthétique en elle-même, qu'il n'est pas nécessaire de cacher impérativement.

Un mode de réalisation particulièrement préféré selon l'invention consiste à fabriquer un vitrage feuilleté constitué de deux substrats de verre assemblés par un intercalaire « tri-couche », dont une feuille de PET munie d'au moins une couche réfléchissant les infrarouges, du type métallique, et disposée entre deux feuilles de polymère thermoplastique de type PVB, la feuille et sa couche étant en retrait par rapport aux chants des deux verres et ces deux feuilles de thermoplastique venant, par collage mutuel, sceller sa périphérie vis-à-vis de l'extérieur. En fait, l'assemblage d'un vitrage feuilleté se fait généralement par chauffage et mise sous pression, notamment par passage du vitrage pré-assemblé dans un autoclave : de fait, les bords des deux feuilles de PVB, devenant collants et se ramollissant vont se solidariser dans la zone périphérique où la feuille de type PET a été margée, étanchéifiant parfaitement la couche réfléchissante.

Comme on l'a évoqué plus haut, dans ces zones de « retrait » et/ou dans les « fenêtres » ménagées dans ou au bord de la feuille type PET, sont éventuellement insérés des éléments type éléments de connectique, capteur, antenne, élément électronique, qui se trouvent ainsi « noyés » dans le PVB ou à l'interface PVB/verre.

L'invention a également pour objet un procédé de fabrication du même type de vitrage, répondant aux mêmes critères que le procédé précédent et qui en constitue un mode de réalisation particulier.

Ce second procédé comporte les étapes suivantes :
□ a) - on découpe l'intercalaire « complet » ou comprenant déjà au moins la feuille munie de la (des) couche(s) mince(s) à des dimensions essentiellement identiques ou supérieures à celles de l'un au moins des deux substrats (étape identique à celle du premier procédé),
□ b) - on incise l'intercalaire sur au moins l'épaisseur de la feuille munie de la (des) couche(s) mince(s), l'une à « l'intérieur » de l'autre, de manière à délimiter au moins une zone entre ces deux lignes,
□ c) - on extrait de l'intercalaire au moins la feuille munie de la (des) couche(s) mince(s) dans cette zone délimitée par les deux lignes d'incision,
□ d) - on assemble l'intercalaire « complet » entre les deux substrats en lui adjoignant éventuellement sa (ses) feuille(s) de polymère manquante(s) dans le cas où il n'était pas « complet » précédemment (étape identique à l'étape c) du premier procédé),
□ e) - on procède à la transformation du vitrage feuilleté (étape identique à l'étape e) du premier procédé).

(La terminologie est la même que pour le procédé précédent).

On comprend ici par lignes d'incision « l'une à l'intérieur de l'autre », deux lignes telles que l'aire intérieure délimitée par l'une des deux lignes se trouve complètement inclue dans l'aire intérieure délimitée par l'autre ligne. En fait, ici, il ne s'agit pas de « marger » la feuille du PET de l'intercalaire, mais d'en extraire une bordure, une « goulotte » à une distance proche du chant de l'intercalaire, bordure, « goulotte », correspondant à la zone de la feuille localisée entre les deux lignes d'incision et que l'on va extraire avant assemblage. On n'évite donc pas qu'éventuellement il puisse apparaître des débuts de corrosion de la (des) couche(s) mince(s) sur la périphérie externe du vitrage une fois transformé, mais ces débuts de corrosion vont se trouver complètement « stoppés » par cette goulotte, qui crée une discontinuité suffisante dans la (les) couche(s) pour empêcher la propagation de la corrosion vers la partie centrale du vitrage. On peut éventuellement masquer la périphérie du vitrage où des traces de corrosion peuvent apparaître, notamment par un revêtement opacifiant tel que ceux décrits dans le contexte du premier procédé.

Dans ce mode de réalisation spécifique tout comme dans le procédé selon l'invention plus général mentionné plus haut, il faut donc comprendre que dans le vitrage final, on parvient à garder à la couche fonctionnelle son intégrité dans la zone de visibilité du vitrage, avec notamment deux cas de figures :
- soit on marge véritablement la couche (et son support), dans ce cas l'ensemble de la couche restante dans le vitrage final est protégé,
- soit, grâce à la goulotte décrite plus haut, on n'a pas de margeage en ce sens que la couche et son support ne sont pas nécessairement en retrait par rapport aux chants des verres du vitrage final, mais la zone centrale de la couche délimitée par la ligne d'incision « la plus interne » reste intègre, la zone de la couche à l'extérieur de la goulotte c'est-à-dire la zone la plus périphérique étant considérée comme « sacrifiée » et ne faisant plus partie à proprement parlé de la couche fonctionnelle « opérationnelle »/« efficace » au sens de l'invention.

La largeur de la « goulotte » peut être modulée à volonté. Elle peut prendre la forme d'une bande d'épaisseur constante, dont le profil suit, dans des proportions plus réduites, ceux des chants des verres. Elle peut aussi être de largeur variable, notamment plus large dans les zones les plus susceptibles d'attaque corrosive.

On peut extraire cette goulotte avant assemblage par traction mécanique, manuellement ou de manière automatisée. Si l'incision se fait sur l'épaisseur de la feuille munie de couche (s) du type PET, mais aussi sur la feuille qui la recouvre et qui fait partie de l'intercalaire, par exemple en PVB, il peut être préférable, une fois l'extraction effectuée, d'ajouter dans la zone extraite une bande de PVB de dimensions adaptées, de façon à ce que la qualité du feuilletage ne souffre pas du fait d'un intercalaire localement d'épaisseur moindre. Ce n'est cependant pas indispensable, notamment quand la largeur de la « goulotte » est faible, ce qui est généralement le cas (de l'ordre de 1 à 3 mm par exemple).

Les vitrages selon l'invention peuvent également être fabriqués par un autre procédé de fabrication, répondant aux mêmes critères que les deux procédés précédents.

Ce troisième procédé comporte les étapes suivantes :
□ a') - on découpe l'intercalaire à des dimensions inférieures à celles des deux substrats de verre,
□ b') - on positionne l'intercalaire au contact de l'un des deux substrats le verre, de manière à ce qu'il soit, au moins en partie, en retrait par rapport aux chants des verres,
□ c') - on dispose sur la face du verre tournée vers l'intercalaire laissée nue par le retrait de ce dernier, une ou des bandes à base de polymère, notamment de polymère thermoplastique du type PVB,
□ d') - on assemble ce premier verre muni de l'intercalaire et de cette (ces) bande(s) avec le second verre, puis on effectue la transformation usuelle en vitrage feuilleté.

Ici, il faut comprendre par « intercalaire » la même structure et nature de matériaux que dans le cadre des procédés précédents (type PVB/PET/couche(s)/PVB).

Pour l'étape (a'), on choisit une taille d'intercalaire telle que, de facto, on obtient le margeage voulu, en général dans des formes « standards » aux coins carrés, bien qu'il ne soit pas exclu qu'il présente un profil plus complexe, modulé.

Pour l'étape (c'), on utilise dans les zones margées une ou des bandes de polymère thermoplastique qui vont en fait jouer le rôle de joint périphérique de scellement garantissant l'étanchéité de la (des) couche(s) mince(s) à propriété(s) thermique(s), et du vitrage feuilleté en général.

En choisissant des bandes à base de PVB, on optimise leur compatibilité avec les feuilles de polymère thermoplastique de l'intercalaire enserrant la feuille munie de la (des) couche(s) mince(s), qui, on l'a vu précédemment, sont également usuellement à base de PVB. Les bandes peuvent avoir exactement la forme complémentaire de la forme de l'intercalaire pour affleurer les chants des verres, ou être de dimensions plus petites, de forme un peu plus simple : lors de l'assemblage, cette (ces) bande(s) est (sont) en fait susceptible(s) de fluage, sous l'effet de chaleur et/ou de la pression, et de remplir aussi tout l'interstice disponible, un éventuel « débordement » nécessitant un ébardage en final.

On peut chercher à avoir un effet d'étanchéité maximal, en sélectionnant de manière appropriée la composition de cette (ces) bande(s). Ainsi, il peut s'agir à la base de PVB, mais dont on a optimisé la formulation pour renforcer ses propriétés de barrière à l'humidité, par exemple par ajout d'additifs appropriés connus de l'homme de l'art.

Cette ou ces bande(s) peut (peuvent) être déposée(s) par un opérateur, manuellement, ou par un dispositif approprié, notamment automatisé.

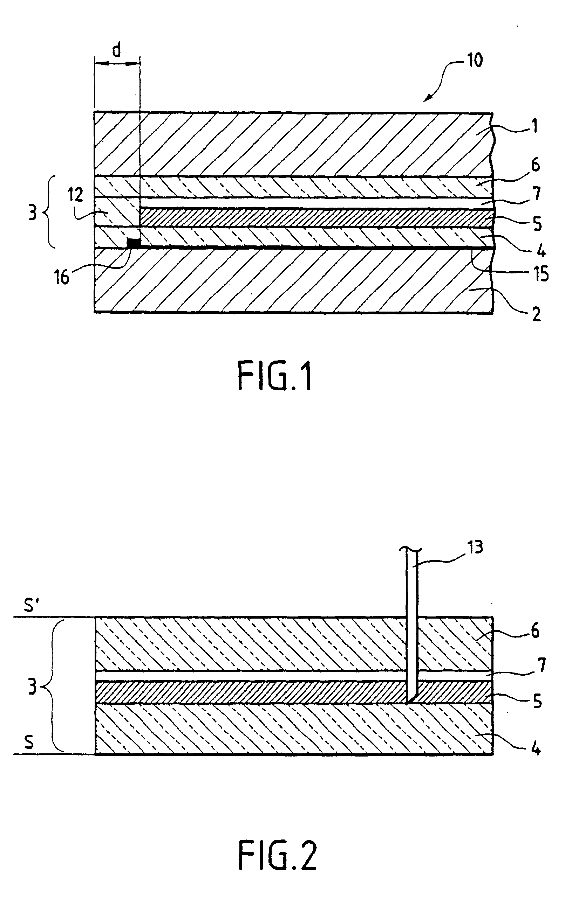

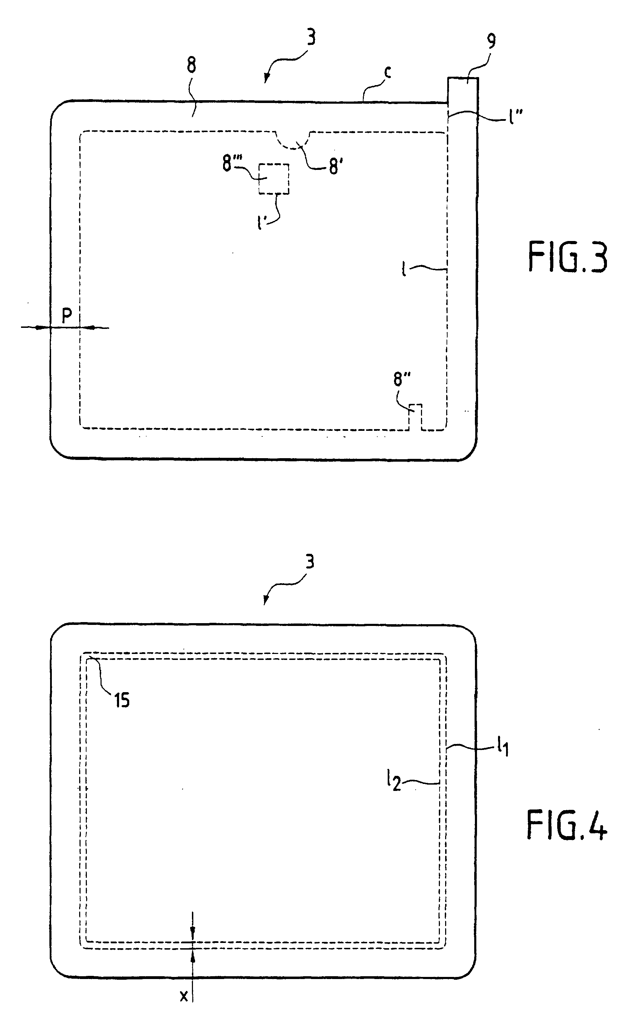

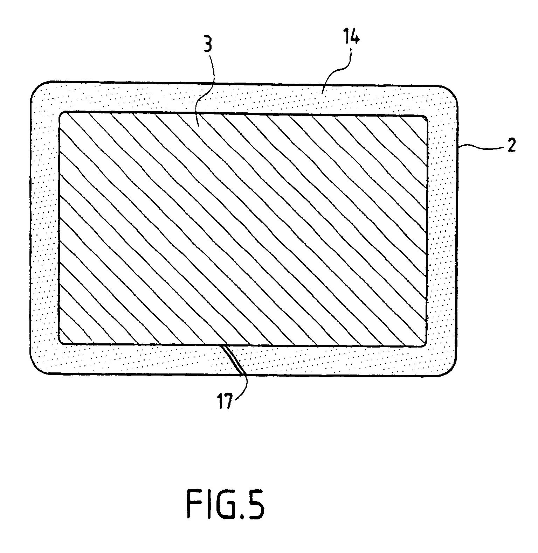

L'invention sera décrite plus en détails ci-après, à l'aide de modes de réalisation non limitatifs s'appuyant sur les figures suivantes :
→ **Figure 1** : le vitrage feuilleté une fois assemblé selon le premier et le second procédés de l'invention,
→ **Figures 2 et 3** : des étapes dans la fabrication du vitrage de la figure 1 selon le premier procédé,
→ **Figure 4** : une étape dans la fabrication du vitrage feuilleté selon le second procédé,
→ **Figure 5** : une étape dans la fabrication du vitrage feuilleté de la figure 1 selon le troisième procédé de l'invention.

Ces figures, pour plus de clarté, se veulent extrêmement schématiques, et ne respectent, notamment, pas les proportions entre les dimensions, notamment les épaisseurs, des différents matériaux représentés.

### Exemple 1

Cet exemple se rapporte aux figures 1 à 3, et au premier procédé selon l'invention. La figure 1 représente en coupe le vitrage feuilleté 10 une fois terminé. Il s'agit d'un pare-brise pour véhicule. On y voit les deux substrats rigides 1, 2 en verre silico-sodo-calcique d'environ 2 à 3 mm d'épaisseur, assemblés par un intercalaire 3 se décomposant en une feuille centrale 5 en PET revêtue sur l'une de ses faces d'un revêtement à propriétés de protection solaire 7 et disposée entre deux feuilles de PVB 4, 6. Les deux verres 1 , 2, représentés plans, peuvent en fait être bombés :
□ la feuille 5 de PET à une épaisseur de 50µm,
□ chacune des deux feuilles de PVB 4, 6 a une épaisseur de 0,38 mm,
□ le revêtement 7 se décompose en une première couche de matériau diélectrique du type In₂O₃, surmontée d'une couche réfléchissante en argent, elle-même surmontée d'une couche en matériau diélectrique du type In₂O₃. Ce type d'empilement est par exemple décrit avec plus de détails dans le brevet WO-92/10632, et présente une résistance carrée en ohm d'environ 4ohm/carré.
□ la feuille 5 de PET est margée sur tout son pourtour par rapport aux chants des deux verres 1, 2 sur une distance (d) (distance variable).

Sur la face de la feuille 4 de PVB tournée vers le verre 2, peut être incrusté un réseau de fils chauffants 15 avec ses collecteurs de courant adhoc 16.

Dans la zone margée de la feuille 5 de PET munie du revêtement 7, les deux feuilles 4, 6 de PVB se sont solidarisées pour former un joint d'étanchéité 1 2.

Le procédé de fabrication d'un tel vitrage se déroule de la façon suivante:
□ comme représenté à la figure 2 en coupe, on positionne sur une surface S de référence appropriée l'intercalaire 3 découpé à des dimensions identiques au quasiment identiques à celles qu'il doit avoir pour juste affleurer les chants des verres 1 , 2 une fois positionné entre ceux-ci. Ensuite, un outil de découpe dont on a représenté que la lame tranchante 13 vient, en se référençant par rapport à ladit surface S (ou par rapport à la surface de référence S' suivant la face externe de la feuille de PVB 6), inciser l'épaisseur de la feuille de PVB « supérieure » 6 et de celle de la feuille 5 munie de son revêtement 7. Comme représenté à la figure 3, avec l'intercalaire une fois incisé, en vue de dessus, ceete ligne I suit le pourtour c du chant de l'intercalaire 3, dans des proportions plus petites, de manière à définir une zone périphérique 8 de largeur p variable, définissant notamment deux « enclaves » arrondies 8' et 8" au niveau de deux des bords de l'intercalaire. Une fenêtre 8''' est également prévue, par incision sur une même profondeur selon une ligne l' fermée. Est également prévue une « languette d'amorçage » 9, dans le prolongement du bord le plus petit de l'intercalaire 3, soit une petite surface destinée à « déborder » du vitrage une fois l'intercalaire 3 positionné entre les deux verres 1, 2, avec une ligne d'incision l" destinée à faciliter la « déchirure » de cette languette lors du détachement de la zone 8. On vient ensuite manmuellement décoller la fenêtre 8''', c'est-à-dire la zone incisée de la feuille 5 et la feuille de PVB 4, puis ajouter, à l'endroit de la fenêtre, une « pastille » de PVB de taille ajustée à la dimension de la zone 8"', de manière à conserver à l'intercalaire 3 une épaisseur sensiblement uniforme. (Une autre solution consiste à n'inciser que, par exemple, les ¾ du pourtour l', à soulever la zone incisée du PVB 6, à retirer complètement la zone de la feuille 5 correspondant à la fenêtre, puis à reposer la zone incisée du PVB 6 en place. Il est alors inutile d'ajouter la « pastille » précédente, l'épaisseur de l'intercalaire 3 étant essentiellement maintenue). Ensuite l'intercalaire 3 ainsi incisé est positionné entre les deux verres 1, 2. On maintient ces trois éléments en position, puis on tire sur la languette d'amorçage 9, ce qui a pour'conséquence de détacher du vitrage la zone périphérique 8 de la seule feuille de PET 5 munie de son revêtement 7. Pour faciliter cette opération, on peut prévoir une seconde languette d'amorçage, de préférence localisée dans le coin diamétralement opposé à la première. La zone périphérique de la feuille de PVB 6 qui a, elle aussi, été incisée, reste en place, du fait de son adhérence supérieure au verre 1 qu'au PET 5, même avant toute opération de transformation véritable.

La feuille de PET 5 se trouve ainsi margée de façon tout-à-fait modulable. Ainsi, l'enclave arrondie 8' est de forme étudiée de manière à pouvoir insérer entre verres 1, 2 et intercalaire 3, dans cette zone, un élément de type capteur ou puce, l'enclave 8" peut correspondre avantageusement à la zone de jonction entre les collecteurs 16 et les amenées de courant, et la fenêtre 8"' peut permettre d'insérer un capteur pour télépéage ou une antenne G.P.S. Le revêtement 7 « évite » ainsi tout contact avec ces capteurs et zones de jonction électrique, et, de manière générale, contourne toutes les zones les plus susceptibles d'être attaquées par l'humidité, notamment.

### EXEMPLE 2

Ce second exemple est conforme au second procédé de l'invention, qui utilise des moyens techniques assez similaires au premier procédé comme le montre la figure 4.

La différence réside dans la façon dont on incise l'épaisseur de l'ensemble PET(5)/couches(7)/PVB(7) représenté à la figure 2 ; cette fois, on procède à deux lignes d'incision fermées I₁ et I₂, la ligne d'incision I₂ se trouvant à l'intérieur de l'aire délimitée par la ligne d'incision I₁, de manière à créer une zone 15 qui se trouve entre les lignes I₁, et I₂. La figure 4 représente le mode de réalisation le plus simple, consistant à ce que cette zone 15 ait la forme d'une bande fine de largeur constante, « suivant » le bord de l'intercalaire. L'incision I₁ se fait à environ 4 à 8 mm du bord de l'intercalaire, notamment à 6 mm, l'incision I₂ étant opérée de manière à ce que la bande 15 ait une largeur minimum de 1 mm, et notamment d'environ 1 à 2 mm.

Une fois les deux incisions faites, on extrait ensuite cette couche 15 comprenant donc l'empilement PET/couches/PVB, ce qui crée une « goulotte » dans l'intercalaire assurant une discontinuité dans les couches (7).

On procède ensuite, de manière habituelle, à l'assemblage et à la transformation du vitrage. Le vitrage obtenu, à la différence de celui selon la figure 1 , présente donc une feuille de PET et un revêtement 7 affleurant, mais avec une discontinuité au niveau de la zone 15 extraite empêchant la propagation de corrosion à partir du bord du vitrage. Ici la zone 15 extraite, a une largeur x d'à peine 1 mm de large, donc de taille suffisamment faible pour que l'épaisseur réduite de l'intercalaire à cet endroit ne provoque pas de défaut dans le feuilletage du vitrage. On peut aussi choisir :
□ soit de faire les incisions seulement sur l'intercalaire « incomplet » dépourvu de la dernière couche de PVB 7, que l'on vient ajouter par la suite,
□ soit de faire les incisions sur l'intercalaire « complet », et venir, après extraction de la bande 15, ajouter un peu de polymère pour garder à l'intercalaire une épaisseur quasi constante.

### EXEMPLE 3

Selon le troisième procédé de l'invention, on obtient un vitrage feuilleté assez similaire au premier, avec les mêmes éléments. La différence réside dans la nature du joint d'étanchéité 12 selon la figure 1. Dans ce cas, il s'agit d'un joint rapporté, qui ne provient pas, ou pas exclusivement, du fluage des deux feuilles 4, 6 de PVB, et dont la composition chimique a été selectionnée pour être particulièrement étanche à l'eau liquide et l'eau vapeur.

Le procédé de fabrication se déroule de la façon suivante :
□ on découpe l'ensemble de l'intercalaire 3 au départ à des dimensions inférieures à celles des verres 1 et 2, avec des coins carrés,
□ puis, comme représenté à la figure 5, on vient positionner l'intercalaire 3 sur le premier verre 2, puis une bande 14 de PVB « étanche » dans les zones du verre laissées à nu. Cette bande, pour plus de simplicité, peut être de forme géométrique simple, par exemple, obtenue à partir d'un ruban de section parallépipédique et d'épaisseur adéquate par rapport à celle de l'intercalaire, que l'on vient positionner autour de l'intercalaire 3. Il pourrait tout aussi bien s'agir de quatre bandes, une pour chacun des bords laissés à nu. Cette bande 14, lors de la transformation, flue pour occuper tout l'interstice inter-verre 1, 2 laissé libre par l'intercalaire 3. En fait, concrètement, on dimensionne l'intercalaire 3 de façon à ce que ses dimensions soient égales à celles du verre 2, moins la largeur de la bande 14 utilisée.

Après le positionnement de cette bande 14, il ne reste plus qu'à positionner le second verre 1, puis à procéder à l'assemblage par les techniques habituelles.

A noter que la zone de jonction 17 entre le début et la fin de la bande 14 est de préférence prévue en biais par rapport aux bords des verres 1, 2, pour garantir une bonne étanchéité à ce niveau, même en cas de jonction non complètement continue.

Selon le premier, le second ou le troisième procédé, le vitrage feuilleté selon l'invention, grâce au revêtement 7, présente des propriétés de protection solaire intéressantes : il peut présenter des valeurs de transmission lumineuse T_{L} de l'ordre de 76 à 78 %, de réflexion lumineuse R_{L} d'au plus 10 %, de transmission énergétique T_{E} d'au plus 50 %, et de réflexion des infrarouges supérieure à 45 %, (mesurées avec l'Illuminant D₆₅).

## Revendications

1. Procédé de fabrication d'un vitrage feuilleté comprenant au moins deux substrats de verre (1, 2) assemblés par un intercalaire (3) comprenant au moins une feuille (5) à base de polymère(s) munie sur au moins une des ses faces d'une couche mince ou d'un empilement de couches minces (7) fonctionnelle(s), ***caractérisé en ce qu***'il comporte les étapes suivantes :
□ a) - on découpe l'intercalaire (3) « complet » ou comprenant déjà au moins la feuille (5) munie de la (des) couche(s) mince(s) (7) à des dimensions essentiellement identiques ou supérieures à l'un au moins des deux substrats de verre (1),
□ b) - on incise ledit intercalaire sur au moins l'épaisseur de la feuille (5) munie de la couche ou de l'empilement de couches minces à propriétés de réflexion dans l'infrarouge, de manière à délimiter au moins une zone périphérique (8,x) de ladite feuille (5) localisée entre la ligne d'incision (L₁, L₂) et son bord,
□ c) - on assemble l'intercalaire (3) « complet » entre les deux substrats de verre (1,2), en lui adjoignant éventuellement sa (ses) feuille(s) de polymère manquante(s),
□ d) - on détache par traction mécanique ladite (lesdites) zone(s) périphérique(s) (8,x),
□ e) - on procède à la transformation du vitrage feuilleté (1, 2, 3), les étapes se déroulant dans cet ordre ou dans un ordre différent, notamment en inversant l'ordre des étapes (c) et (d).

2. Procédé selon la revendication 1, ***caractérisé en ce que la*** feuille (5) est à base de polymères flexibles du type polyester, notamment polyester linéaire tel que le polyéthylènetéréphtalate PET, polycarbonate, polypropylène, polyéthylène, plyéthersulfure, polysulfure, polymétracrylate.

3. Procédé selon la revendication 1 ou la revendiaction 2, **caractérisé en ce que** l'intercalaire comprend plusieurs feuilles de polymère, avec notamment la feuille (5) munie de la couche ou de l'empilement de couches à propriétés dans l'infrarouge disposée entre deux feuilles (4, 6) à base de polymères thermoplastiques, notamment en polyvinylbutyral PVB ou polyuréthane PU.

4. Procédé selon l'une des revendications précédentes, ***caractérisé en ce que*** l'intercalaire (3) comprend une pluralité de feuilles à base de polymère(s) (4, 5,6), et **en ce qu'**on incise lors de l'étape (b) la feuille (5) munie de la couche ou de l'empilement de couches minces à propriétés de réflexion dans l'infrarouge (7) et la ou les feuilles (6) de polymères qui la surmonte(nt).

5. Procédé selon la revendication 4, **caractérisé en ce que** lors de l'étape (d), seule(s) la (les) zone(s) périphérique(s) de la feuille (5) munie de la couche ou de l'empilement de couches à propriétés de réflexion dans l'infrarouge (7) est (sont) détachée(s).

6. Procédé selon l'une des revendications précédentes, **caractérisé en ce qu**'on opère l'incision par emboutissage, ou par découpe à l'aide d'un organe mobile muni d'un élément tranchant ou d'un laser.

7. Procédé selon l'une des revendications précédentes, ***caractérisé en ce que*** la (les) zone(s) périphérique(s) (8) de la feuille (5) est (sont) conçue(s) de façon à déborder localement des chants des substrats de verre, notamment sous forme de languette(s) d'amorçage (9) sur laquelle (lesquelles) on exerce une traction mécanique pour détacher ladite (lesdites) zone(s) périphérique(s) lors de l'étape (d).

8. Procédé selon l'une des revendications précédentes, **caractérisé en ce que** la couche ou l'empilement de couches minces (7) comporte(nt) au moins une couche à base d'au moins un métal appartenant notamment au groupe comprenant : argent, cuivre, indium, or, nickel, chrome, aluminium, tantale, niobium, ou à base d'au moins un oxyde métallique dopé, notamment de l'oxyde d'étain dopé au fluor SnO₂.F, de l'oxyde d'indium dopé à l'étain ITO, ou de nitrure métallique du type TiN, ZrN.

9. Procédé selon l'une des revendications précédentes, **caractérisé en ce que** la (les) couche(s) mince(s) (7) à propriétés de réflexion dans l'infrarouge est (sont) munie(s) de moyens d'alimentation en électricité pour la rendre chauffante.

10. Procédé selon l'une des revendications précédentes, **caractérisé en ce qu'**on munit une des faces d'une des feuilles (4, 6) constitutives de l'intercalaire (3) non en contact avec la (les) couche(s) à propriétés de réflexion dans l'infrarouge (7), d'un réseau de fils chauffants (10).

11. Procédé selon l'une des revendications précédentes, ***caractérisé* en ce que** la ligne d'incision (I), dans des proportions plus réduites, suit au moins en partie un profil voisin ou identique à celui des chants des substrats de verre (1, 2).

12. Procédé selon l'une des revendications précédentes, **caractérisé en *ce que* la** ligne d'incision (I) délimite une zone périphérique continue (8) sur la feuille (5) de façon à ce qu'une fois l'assemblage effectué, il y ait une marge (d) entre le chant de la feuille (5) et les chants des substrats de verre (1 , 2), toujours d'au moins 3 mm, et notamment d'environ 6 mm.

13. Procédé selon l'une des revendications précédentes ***caractérisé en ce que*** l'on pratique deux lignes d'incision (L₁,L₂) de façon à extraire de la feuille (S) une « goulotte » délimitant la zone « opérationnelle » de la couche (5).

14. Procédé selon l'une des revendications précédentes, **caractérisé en ce que** la (les) zone(s) périphérique(s) (8,8') incisées de la feuille (5) délimitée(s) par la (les) ligne(s) d'incision (I) est (sont) conçue(s) de façon à « enclaver » les éléments destinés à être insérés entre substrats de verre (1, 2) et intercalaire (3) dans le vitrage feuilleté, notamment éléments de connectique, du type amenées de courant, capteurs, du type capteurs volumétriques ou capteurs d'humidité, éléments électroniques du type puce électronique, antenne radio, ou à créer des « fenêtres », notamment pour laisser passer des ondes électromagnétiques.

15. Procédé selon l'une des revendications précédentes, **caractérisé en ce qu'**avant l'assemblage (c), on incise également l'intercalaire (3) sur au moins l'épaisseur de la feuille (5) munie de la ou des couches minces (7), de manière à délimiter une ligne fermée (I') sur elle-même permettant de créer des « fenêtres » 8'''.

16. Procédé selon l'une des revendications précédentes, **caractérisé en ce qu'**on masque tout ou partie des zones de l'intercalaire (3) correspondant au(x) zone(s) extraite(s) de la feuille (5) lors de l'étape (d) par un revêtement opacifiant, notamment par dépôt d'émail sur la face extérieure ou intérieure d'au moins un des substrats de verre (1 , 2) ou par impression, sérigraphie d'encre sur l'une des faces de l'une des feuilles (4, 6) à base de polymère associées à la feuille (5) dans l'intercalaire (3), ou en teintant dans la masse la bordure d'au moins une de ces feuilles (4, 6), notamment sous la forme d'une bande de coloration dégradée.

17. Vitrage feuilleté (1, 2, 3) notamment obtenu selon le procédé conforme à l'une des revendications précédentes, comprenant deux substrats de verre (1, 2) assemblés par un intercalaire (3) multi-couche dont une feuille (5) de type PET munie d'au moins une couche mince fonctionnelle (7) et disposée entre deux feuilles (4, 6) de polymère thermoplastique du type PVB, ***caractérisé en ce que*** la feuille (5) et sa couche (7) sont en retrait par rapport aux chants des deux substrats de verre (1, 2) et à ceux des deux feuilles (4, 6) de polymère thermoplastique, lesdites feuilles (4, 6) venant par collage mutuel sceller sa périphérie vis-à-vis de l'extérieur.

18. Vitrage feuilleté (1, 2, 3), notamment obtenu selon le procédé conforme à l'une des revendications précédentes comprenant deux substrats de verre (1, 2) assemblés par un intercalaire (3) multi-couche dont une feuille (5) de type PET munie d'au moins une couche fonctionnelle (7) et disposée entre deux feuilles (4, 6) de polymère thermoplastique du type PVB ***caractérisé en ce que*** la feuille (5) et sa couche (7) sont munies d'une goulotte préservant l'intégrité de la zone intérieure de la couche (7) définie par ladite goulotte.

19. Vitrage feuilleté selon la revendication 17 ou 18, **caractérisé en ce *que*** sont insérés entre les deux substrats de verre (1, 2) au niveau des zones de retrait de la feuille (5) des éléments du type éléments de connectique, capteurs, antennes, éléments électroniques.

20. Vitrage feuilleté ( 1 , 2, 3) selon l'une des revendications 17 à 19, ***caractérisé en ce que*** la feuille (5) et munie de sa couche (7) présente au moins une « fenêtre » (8"') permettant l'insertion d'éléments du type éléments de connectique, capteurs, antennes, éléments électroniques ou laissée telle quelle, notamment pour servir de fenêtre de passage pour des ondes électromagnétiques.

21. Vitrage feuilleté (1, 2, 3) selon l'une des revendications 17 à 20, ***caractérisé en ce qu'***il comprend un réseau de fils chauffants (10), notamment sur l'une des faces d'une des feuilles (4, 6) constitutives de l'intercalaire (3) non en contact avec la couche mince fonctionnelle (7), ledit réseau étant distant d'au plus 1 cm du chant des substrats de verre (1, 2).

## Patentansprüche

1. Verfahren zur Herstellung einer Verbundglasscheibe, die wenigstens zwei Glassubstrate (1, 2) umfasst, die durch eine Zwischenschicht (3) assembliert sind, die mindestens eine Folie (5) auf der Basis von Polymer/en umfasst, die auf mindestens einer Seite mit einer funktionellen dünnen Schicht oder einem Aufbau aus funktionellen dünnen Schichten (7) versehen ist, **dadurch gekennzeichnet, dass** es die Stufen:
a) Zuschneiden der Zwischenschicht (3), die "komplett" ist oder bereits mindestens die Folie (5) umfasst, die mit der/den dünnen Schicht/en (7) versehen ist, auf Abmessungen, die im Wesentlichen gleich denen von mindestens einem der zwei Glassubstrate (1) oder größer als diese sind,
b) Einschneiden der Zwischenschicht über mindestens die Dicke der Folie (5), die mit der dünnen Schicht oder dem Aufbau aus dünnen Schichten mit Reflexionseigenschaften im Infrarot versehen ist, sodass wenigstens ein Randbereich (8, x) der Folie (5) begrenzt wird, der sich zwischen der Schneidlinie (L₁, L₂) und dem Rand befindet,
c) Assemblieren der "kompletten" Zwischenschicht (3) zwischen den zwei Glassubstraten (1, 2), indem ihr gegebenenfalls die fehlende/n Polymerfolie/n hinzugefügt wird/werden,
d) Ablösen des/der Randbereiche/s (8, x) durch mechanischen Zug und
e) Weiterbearbeiten der Verbundglasscheibe (1, 2, 3), wobei die Stufen in dieser oder einer anderen Reihenfolge durchgeführt werden, insbesondere, indem die Reihenfolge der Stufen c) und d) vertauscht wird,
umfasst.

2. Verfahren nach Anspruch 1, **dadurch gekennzeichnet, dass** die Folie (5) auf der Basis flexibler Polymerer vom Typ Polyester ist, speziell lineare Polyester wie Polyethylenterephthalat, PET, Polycarbonat, Polypropylen, Polyethylen, Polyethersulfid, Polysulfid und Polymethacrylat.

3. Verfahren nach Anspruch 1 oder 2, **dadurch gekennzeichnet, dass** die Zwischenschicht mehrere Polymerfolien umfasst, wobei insbesondere die Folie (5), die mit der Schicht oder dem Aufbau aus Schichten mit Eigenschaften im Infrarot versehen ist, zwischen zwei Folien (4, 6) auf der Basis von thermoplastischen Polymeren, speziell aus Polyvinylbutyral, PVB, oder Polyurethan, PU, angeordnet ist.

4. Verfahren nach einem der vorhergehenden Ansprüche, **dadurch gekennzeichnet, dass** die Zwischenschicht (3) eine Vielzahl von Folien auf der Basis von Polymer/en (4, 5, 6) umfasst, und dass in der Stufe b) die Folie (5), die mit der dünnen Schicht oder dem Aufbau aus dünnen Schichten (7) mit Reflexionseigenschaften im Infrarot versehen ist, und die Polymerfolie/n (6), die sie bedeckt/bedecken, eingeschnitten werden.

5. Verfahren nach Anspruch 4, **dadurch gekennzeichnet, dass** in der Stufe d) nur der/die Randbereich/e der Folie (5), die mit der Schicht oder dem Aufbau aus Schichten (7) mit Reflexionseigenschaften im Infrarot versehen ist, abgelöst wird/werden.

6. Verfahren nach einem der vorhergehenden Ansprüche, **dadurch gekennzeichnet, dass** das Einschneiden durch einen Ziehvorgang oder durch Schneiden mittels eines beweglichen Organs, das mit einem Schneidelement versehen ist, bzw. eines Lasers erfolgt.

7. Verfahren nach einem der vorhergehenden Ansprüche, **dadurch gekennzeichnet, dass** der/die Randbereich/e (8) der Folie (5) derart entworfen ist/sind, dass er/sie lokal über die Kanten der Glassubstrate vorsteht, insbesondere in Form einer oder mehrerer Angriffslaschen (9), auf welche ein mechanischer Zug ausgeübt wird, um in Stufe d) den/die Randbereich/e abzulösen.

8. Verfahren nach einem der vorhergehenden Ansprüche, ***dadurch gekennzeichnet, dass*** die dünne Schicht oder der Aufbau aus dünnen Schichten (7) wenigstens eine Schicht auf der Basis mindestens eines Metalls, das insbesondere zu der Gruppe gehört, die Silber, Kupfer, Indium, Gold, Nickel, Chrom, Aluminium, Tantal und Niob umfasst, oder auf der Basis von mindestens einem dotierten Metalloxid, speziell von mit Fluor dotiertem Zinnoxid, SnO₂:F, mit Zinn dotiertem Indiumoxid, ITO, oder Metallnitrid vom Typ TiN und ZrN, ist, umfasst.

9. Verfahren nach einem der vorhergehenden Ansprüche, **dadurch gekennzeichnet, dass** die dünne/n Schicht/en (7) mit Reflexionseigenschaften im Infrarot mit Mitteln für die Stromzuleitung versehen ist/sind, um sie beheizbar zu machen.

10. Verfahren nach einem der vorhergehenden Ansprüche, **dadurch gekennzeichnet, dass** eine Seite einer der Folien (4, 6), welche die Zwischenschicht (3) bilden, und welche sich nicht in Kontakt mit der/den Schicht/en (7) mit Reflexionseigenschaften im Infrarot befindet, mit einem Netz aus Heizdrähten (10) versehen wird.

11. Verfahren nach einem der vorhergehenden Ansprüche, **dadurch gekennzeichnet, dass** die Schneidlinie (I) mit kleineren Proportionen mindestens teilweise einem Profil folgt, das ähnlich oder identisch dem der Kanten der Glassubstrate (1, 2) ist.

12. Verfahren nach einem der vorhergehenden Ansprüche, **dadurch gekennzeichnet, dass** die Schneidlinie (I) einen ununterbrochenen Randbereich (8) auf der Folie (5) derart begrenzt, dass nach der Assemblierung zwischen der Kante der Folie (5) und den Kanten der Glassubstrate (1, 2) ein Rand d) von stets mindestens 3 mm und insbesondere von etwa 6 mm vorhanden ist.

13. Verfahren nach einem der vorhergehenden Ansprüche, **dadurch gekennzeichnet, dass** zwei Schneidlinien (L₁, L₂) derart angebracht werden, dass aus der Folie (S) eine "Rinne" entfernt wird, die den "Wirkungsbereich" der Folie (5) begrenzt.

14. Verfahren nach einem der vorhergehenden Ansprüche, **dadurch gekennzeichnet, dass** der/die Randbereich/e (8, 8'), der/die in die Folie (5) eingeschnitten ist/sind und von der/den Schneidlinie/n (I) begrenzt wird/werden, derart entworfen ist/sind, dass die Elemente "umschlossen" werden, die vorgesehen sind, zwischen Glassubstrate (1, 2) und Zwischenschicht (3) in der Verbundglasscheibe eingefügt zu werden, insbesondere Anschlusselemente vom Typ Stromzuleitungen, Sensoren vom Typ volumetrische oder Feuchtigkeitssensoren, elektronische Bauelemente vom Typ Elektronikchip und Radioantenne, oder um "Fenster", insbesondere für den Durchgang elektromagnetischer Wellen, zu bilden.

15. Verfahren nach einem der vorhergehenden Ansprüche, **dadurch gekennzeichnet, dass** vor dem Assemblieren c) auch die Zwischenschicht (3) über mindestens die Dicke der Folie (5), die mit der/den dünnen Schicht/en (7) versehen ist, derart eingeschnitten wird, dass eine um sich selbst geschlossene Linie (I') begrenzt wird, die es erlaubt, "Fenster" 8''' zu bilden.

16. Verfahren nach einem der vorhergehenden Ansprüche, **dadurch gekennzeichnet, dass** Bereiche der Zwischenschicht (3), die dem/den in der Stufe d) von der Folie (5) entfernten Bereich/en entsprechen, mit einer undurchsichtig machenden Beschichtung, insbesondere durch Aufbringen eines Emails auf der Außen- oder Innenseite mindestens eines der Glassubstrate (1, 2), durch Bedrucken bzw. Siebdruck auf einer Seite einer der Folien (4, 6) auf Polymerbasis, die mit der Folie (5) in der Zwischenschicht (3) verbunden sind, oder indem der Rand mindestens einer dieser Folien (4, 6), insbesondere in Form eines Bandes mit abgestufter Färbung, in der Masse eingefärbt wird, ganz oder teilweise abgedeckt werden.

17. Verbundglasscheibe (1, 2, 3), die insbesondere gemäß dem Verfahren nach einem der vorhergehenden Ansprüche erhalten worden ist, und welche zwei Glassubstrate (1, 2) umfasst, die durch eine mehrteilige Zwischenschicht (3) miteinander verbunden sind, davon eine Folie (5) vom Typ PET, die mit mindestens einer funktionellen dünnen Schicht (7) versehen und zwischen zwei Folien (4, 6) aus thermoplastischem Polymer vom Typ PVB angeordnet ist, **dadurch gekennzeichnet, dass** die Folie (5) und ihre Schicht (7) in Bezug auf die Kanten der zwei Glassubstrate (1, 2) und auf diejenigen der zwei Folien (4, 6) aus thermoplastischem Polymer zurückgesetzt sind, wobei die Folien (4, 6) durch Miteinander-Verkleben den Umfang gegenüber der Außenwelt versiegeln.

18. Verbundglasscheibe (1, 2, 3), die insbesondere gemäß dem Verfahren nach einem der vorhergehenden Ansprüche erhalten worden ist, und welche zwei Glassubstrate (1, 2) umfasst, die durch eine mehrteilige Zwischenschicht (3) miteinander verbunden sind, davon eine Folie (5) vom Typ PET, die mit mindestens einer funktionellen Schicht (7) versehen und zwischen zwei Folien (4, 6) aus thermoplastischem Polymer vom Typ PVB angeordnet ist, **dadurch gekennzeichnet, dass** die Folie (5) und ihre Schicht (7) mit einer Rinne versehen sind, welche die Integrität des von dieser Rinne definierten Innenbereichs der Schicht (7) erhält.

19. Verbundglasscheibe nach Anspruch 17 oder 18, **dadurch gekennzeichnet, dass** zwischen den zwei Glassubstraten (1, 2) in den zurückgesetzten Bereichen der Folie (5) Elemente vom Typ Anschlusselemente, Sensoren, Antennen und elektronische Bauelemente eingefügt sind.

20. Verbundglasscheibe (1, 2, 3) nach einem der Ansprüche 17 bis 19, **dadurch gekennzeichnet, dass** die Folie (5), die mit der Schicht (7) versehen ist, mindestens ein "Fenster" (8''') aufweist, welches das Einfügen von Elementen vom Typ Anschlusselemente, Sensoren, Antennen und elektronische Bauteile erlaubt oder Platz lässt, insbesondere, um als Fenster für den Durchgang elektromagnetischer Wellen zu dienen.

21. Verbundglasscheibe (1, 2, 3) nach einem der Ansprüche 17 bis 20, **dadurch gekennzeichnet, dass** sie, insbesondere auf einer Seite einer der Folien (4, 6), welche die Zwischenschicht (3) bilden, welche sich nicht im Kontakt mit der funktionellen dünnen Schicht (7) befindet, ein Netz aus Heizdrähten (10) umfasst, dessen Entfernung von der Kante der Glassubstrate (1, 2) höchstens 1 cm beträgt.

## Claims

1. Method of manufacturing laminated glazing comprising at least two glass substrates (1, 2) connected by an insert (3) comprising at least one sheet (5) based on a polymer or polymers provided on at least one of its faces with a functional thin film or a stack of functional thin films (7), **characterised in that** it comprises the following steps:
a) the insert (3), "complete" or already comprising at least the sheet (5) provided with the thin film or films (7), is cut to dimensions which are essentially identical to or greater than at least one of the two glass substrates (1),
b) the said insert is incised over at least the thickness of the sheet (5) provided with the film or stack of thin films with reflection properties in the infrared, so as to delimit at least one peripheral area (8, x) of the said sheet (5) located between the incision line (L₁, L₂) and its edge,
c) the "complete" insert (3) is assembled between the two glass substrates (1, 2), possibly adding to it its missing sheet or sheets of polymer,
d) the said peripheral area or areas (8, x) is or are detached by mechanical traction,
e) the laminated glazing (1, 2, 3) is transformed, the steps taking place in this order or in a different order, in particular by reversing the order of steps (c) and (d).

2. Method according to Claim 1, **characterised in that** the sheet (5) is based on flexible polymers of the polyester type, in particular linear polyesters such as polyethylene terephthalate PET, polycarbonate, polypropylene, polyethylene, polyether sulphide, polysulphide or polymethacrylates.

3. Method according to Claim 1 or Claim 2, **characterised in that** the insert comprises several sheets of polymer, with in particular the sheet (5) provided with the film or stack of films with properties in the infrared disposed between two sheets (4, 6) based on thermoplastic polymers, in particular polyvinyl butyral PVB or polyurethane PU.

4. Method according to one of the preceding claims, **characterised in that** the insert (3) comprises a plurality of sheets based on polymer or polymers (4, 5, 6), and **in that**, during step (b), the sheet (5) provided with the film or stack of thin films with reflection properties in the infrared (7) and the sheet or sheets (6) of polymers surmounting it are incised.

5. Method according to Claim 4, **characterised in that**, during step (d), only the peripheral area or areas of the sheet (5) provided with the film or stack of films with reflection properties in the infrared (7) is or are detached.

6. Method according to one of the preceding claims, **characterised in that** the incision is made by chasing, or by cutting by means of a movable member provided with a cutting element or a laser.

7. Method according to one of the preceding claims, **characterised in that** the peripheral area or areas (8) of the sheet (5) is or are designed so as to locally project beyond the edges of the glass substrates, in particular in the form of initiation tongue or tongues (9) on which a mechanical traction is exerted in order to detach the said peripheral area or areas during step (d).

8. Method according to one of the preceding claims, **characterised in that** the film or stack of thin films (7) comprise at least one base film of at least one metal belonging in particular to the group comprising: silver, copper, indium, gold, nickel, chromium, aluminium, tantalum, niobium, or based on at least one doped metallic oxide, in particular tin oxide doped with fluorine SnO₂.F, indium oxide doped with tin ITO, or metallic nitride of the TiN or ZrN type.

9. Method according to one of the preceding claims, **characterised in that** the thin film or films (7) with reflection properties in the infrared is or are provided with electrical supply means for making it heating.

10. Method according to one of the preceding claims, **characterised in that** one of the faces of one of the sheets (4, 6) constituting the insert (3) not in contact with the film or films with reflection properties in the infrared (7) is provided with a network of heating wires (10).

11. Method according to one of the preceding claims, **characterised in that** the incision line (I), in smaller proportions, at least partly follows a profile close to or identical to that of the edges of the glass substrates (1, 2).

12. Method according to one of the preceding claims, **characterised in that** the incision line (I) delimits a continuous peripheral area (8) on the sheet (5) so that, once assembly has been carried out, there is a margin (d) between the edge of the sheet (5) and the edges of the glass substrates (1, 2), always at least 3 mm and in particular approximately 6 mm.

13. Method according to one of the preceding claims, **characterised in that** two incision lines (L₁, L₂) are made so as to extract from the sheet (S) a "chute" delimiting the "operational" area of the film (5).

14. Method according to one of the preceding claims, **characterised in that** the incised peripheral area or areas (8, 8') of the sheet (5) delimited by the incision line or lines (I) is or are designed so as to "enclose" the elements intended to be inserted between glass substrates (1, 2) and insert (3) in the laminated glazing, in particular connection elements, of the type consisting of current feeds, sensors, volumetric sensors or humidity sensors, electronic elements of the electronic chip card type, radio antenna, or creating "windows" in particular to allow electromagnetic waves to pass.

15. Method according to one of the preceding claims, **characterised in that**, before the assembly (c), the insert (3) is also incised over at least the thickness of the sheet (5) provided with the thin film or films (7), so as to delimit a line (I') closed on itself for creating "windows" 8 "'.

16. Method according to one of the preceding claims, **characterised in that** all or some of the areas of the insert (3) corresponding to the area or areas extracted from the sheet (5) during step (d) are masked by an opacifying covering, in particular by the depositing of enamel on the external or internal face of at least one of the glass substrates (1, 2) or by printing or screen printing of ink on one of the faces of one of the polymer-based sheets (4, 6) associated with the sheet (5) in the insert (3), or by self-colouring the border of at least one of these sheets (4, 6), in particular in the form of a degraded colouring strip.

17. Laminated glazing (1, 2, 3) in particular obtained according to the method in accordance with one of the preceding claims, comprising two glass substrates (1, 2) connected by a multilayer insert (3), including a sheet (5) of the PET type provided with at least one functional thin film (7) and disposed between two sheets (4, 6) of thermoplastic polymer of the PVB type, **characterised in that** the sheet (5) and its film (7) are recessed with respect to the edges of the two glass substrates (1, 2) and those of the two sheets (4, 6) of thermoplastic polymer, the said sheets (4, 6) coming by mutual bonding to seal its periphery vis-à-vis the outside.

18. Laminated glazing (1, 2, 3) in particular obtained according to the method in accordance with one of the preceding claims, comprising two glass substrates (1, 2) connected by a multilayer insert (3), including a sheet (5) of the PET type provided with at least one functional film (7) and disposed between two sheets (4, 6) of thermoplastic polymer of the PVB type, **characterised in that** the sheet (5) and its film (7) are provided with a chute preserving the integrity of the internal area of the film (7) provided by the said chute.

19. Laminated glazing according to Claim 17 or 18, **characterised in that** elements of the type consisting of connection elements, sensors, antennae and electronic elements are inserted between the two glass substrates (1, 2) at the recessed areas of the sheet (5).

20. Laminated glazing (1, 2, 3) according to one of Claims 17 to 19, **characterised in that** the sheet (5) provided with its film (7) has at least one "window" (8''') allowing the insertion of elements of the type consisting of connection elements, sensors, antennae or electronic elements or left as such, in particular to serve as a passage window for electromagnetic waves.

21. Laminated glazing (1, 2, 3) according to one of Claims 17 to 20, **characterised in that** it comprises a network of heating wires (10) in particular on one of the faces of one of the sheets (4, 6) making up the insert (3) not in contact with the functional thin film (7), the said network being distant by no more than 1 cm from the edge of the glass substrates (1, 2).
